# EUROPEAN PATENT APPLICATION

(11) **EP 4 822 490 A1**
(43) Date of publication of application: **14.10.2026**
(21) Application number: 26169567.0
(22) Date of filing: 31.03.2026
(51) Int. Cl.: G06F 1/20, G06F 3/01, G11B 33/14

(54) **COOLING SYSTEM FOR SOLID STATE DRIVES**

(30) Priority: 11.04.2025 US 202563787614 P; 15.08.2025 US 202519301704
(71) Applicant: Microsoft Technology Licensing, LLC, Redmond, WA 98052 (US)
(72) Inventor: FARIAS MOGUEL, Oscar, Redmond, Washington, 98052 (US); ANTONY, Christy Felix Pradeep, Redmond, Washington, 98052 (US); TRIEU, Dennis, Redmond, Washington, 98052 (US)
(74) Representative: CMS Cameron McKenna Nabarro Olswang LLP

(57) **Abstract**

A cooling system (100) for a set of solid state drive (SSD) modules (200) includes a thermal mounting frame (110). The thermal mounting frame includes a thermal transfer plate (112), and a plurality of parallel fins (114) that project outward from a first side (116) of the thermal transfer plate along a length dimension (118). The first side of the thermal transfer plate in combination with each neighboring pair of fins (122) of the plurality of parallel fins defines a slot (124) that accommodates a corresponding SSD module (210) of the set of SSD modules. The thermal transfer plate includes a plurality of parallel spines (320) in which each spine projects into a core region (132) of a corresponding fin of the plurality of parallel fins along a base portion (310) of the length dimension of the fin. For each slot, each fin of the neighboring pair of fins that defines the slot includes an exterior thermal transfer layer (130).

## Description

### BACKGROUND

Solid state drives can be used with computing devices to provide data storage. The E1.S form factor is one example of a solid state drive that is presently used with computing devices. Solid state drives, including the E1.S form factor can be packaged into a solid state drive module by the manufacturer. As an example, a solid state drive module can include padding and an enclosure that surround the solid state drive. Solid state drives can generate heat during their operation. If such heat is not dissipated from the solid state drives, the temperature of the solid state drives and their subcomponents can increase, which has the potential to damage or degrade the solid state drives or their subcomponents.

### SUMMARY

In one example, a cooling system for a set of solid state drive (SSD) modules is disclosed. The cooling system includes a thermal mounting frame and a heat exchanger. The thermal mounting frame includes a thermal transfer plate, and a plurality of parallel fins that project outward from a first side of the thermal transfer plate along a length dimension. The heat exchanger can be located on a second side of the thermal transfer plate. The first side of the thermal transfer plate in combination with each neighboring pair of fins of the plurality of parallel fins defines a slot that accommodates a corresponding SSD module of the set of SSD modules. The thermal transfer plate includes a plurality of parallel spines in which each spine projects into a core region of a corresponding fin of the plurality of parallel fins along a base portion of the length dimension of the fin. For each slot, each fin of the neighboring pair of fins that defines the slot includes an exterior thermal transfer layer located between the core region of the fin and the slot.

In another example, a solid state drive (SSD) assembly for a computing device is disclosed. The assembly includes a plurality of solid state drive (SSD) modules and a thermal mounting frame. The thermal mounting frame includes a thermal transfer plate and a plurality of parallel fins that project outward from a first side of the thermal transfer plate along a length dimension. The first side of the thermal transfer plate in combination with each neighboring pair of fins of the plurality of parallel fins defines a slot that can accommodate a corresponding SSD module of the plurality of SSD modules. The thermal transfer plate includes a plurality of parallel spines, in which each spine projects into a core region of a corresponding fin of the plurality of parallel fins along a base portion of the length dimension of the fin. For each slot, each fin of the neighboring pair of fins that defines the slot includes an exterior thermal transfer layer located between the core region of the fin and the slot to interface with the SSD module that is accommodated within the slot.

In another example, a thermal mounting frame for a plurality of solid state drive (SSD) modules is disclosed. The thermal mounting frame includes a thermal transfer plate and a plurality of parallel fins that project outward from a first side of the thermal transfer plate along a length dimension. The first side of the thermal transfer plate in combination with each neighboring pair of fins of the plurality of parallel fins defines a slot that accommodates a corresponding SSD module of the plurality of SSD modules. The thermal transfer plate includes a plurality of parallel spines in which each spine projects into a core region of a corresponding fin of the plurality of parallel fins along a base portion of the length dimension of the fin. For each slot, each fin of the neighboring pair of fins that defines the slot includes an exterior thermal transfer layer located between the core region of the fin and the slot.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 shows a cooling system for a set of SSD modules.
FIG. 2 shows the cooling system of FIG. 1 in which a set of SSD modules is mounted to a thermal mounting frame of the cooling system.
FIG. 3 shows a detailed view of the thermal mounting frame of FIGS. 1 and 2 through a section.
FIG. 4 shows the detailed view of the thermal mounting frame of FIG. 3 in which an SSD module is mounted to the thermal mounting frame within a slot.
FIG. 5 shows another view of the cooling system of FIGS. 1 and 2.

### DETAILED DESCRIPTION

As briefly introduced above, solid state drives can generate heat during their operation. If such heat is not dissipated from the solid state drives, the temperature of the solid state drives and their subcomponents can increase, which has the potential to damage or degrade the solid state drives or their subcomponents.

A cooling system for a set of solid state drive (SSD) modules, a solid state drive assembly that includes a plurality of SSD modules, and a mounting frame for a plurality of SSD modules are disclosed that offer the potential to address issues associated with dissipating heat from solid state drives during their operation. As an example, the disclosed configurations support the use of liquid cooling of SSD modules by way of a heat exchanger, such as a cold plate. The disclosed configurations can enable higher density of SSD modules in which relatively large quantities of SSD modules are operated within a relatively small volume, while also providing sufficient heat dissipation with respect to the SSD modules.

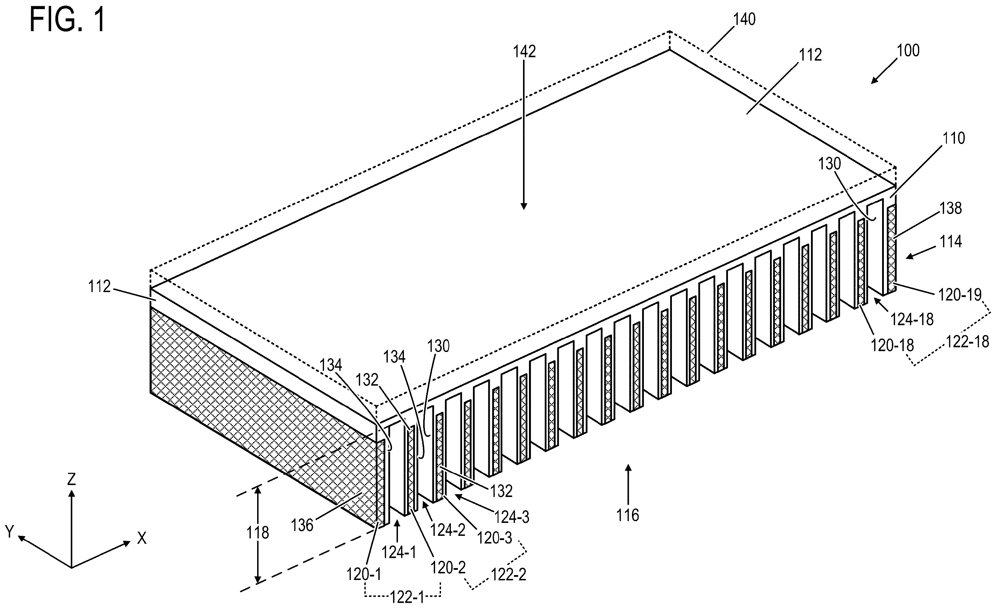

FIG. 1 shows an example cooling system 100 for cooling a set of SSD modules. Cooling system 100 includes a thermal mounting frame 110 to which the set of SSD modules can be mounted.

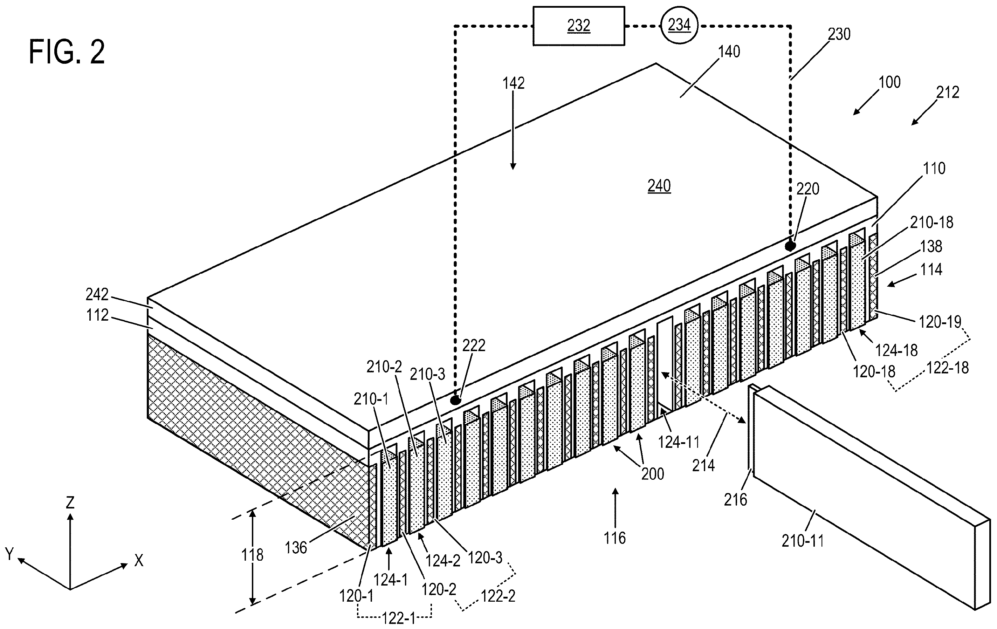

Referring also to FIG. 2, cooling system 100 of FIG. 1 is shown in which a set of SSD modules 200 are mounted to thermal mounting frame 110. In this example, the set of SSD modules 200 includes eighteen (18) SSD modules. Individual SSD modules of the set of SSD modules 200 are identified in FIG. 2 by reference numeral 210, including example SSD modules 210-1, 210-2, 210-3 through 210-18. It will be understood that the set of SSD modules 200 can include any suitable quantity of one or more SSD modules. As shown in FIG. 2, the set of SSD modules 200 can include a plurality of SSD modules. One or more SSD modules (e.g., 200) in combination with thermal mounting frame 110 or cooling system 100 can be referred to herein as a solid state drive (SSD) assembly 212 for a computing device.

Thermal mounting frame 110 includes a thermal transfer plate 112 and a plurality of parallel fins 114 that project outward from a first side 116 of the thermal transfer plate along a length dimension 118. In FIGS. 1 and 2, first side 116 of thermal transfer plate 112 resides within an X-Y plane, and length dimension 118 is parallel to the Z axis. In this example, the plurality of parallel fins 114 includes nineteen (19) parallel fins. Individual fins of the plurality of parallel fins 114 are identified in FIGS. 1 and 2 by reference numeral 120, including example fins 120-1, 120-2, 120-3 through 120-19. It will be understood that thermal mounting frame 110 can include any suitable quantity of two or more fins depending on the quantity of SSD modules that are to be mounted to the thermal mounting frame.

First side 116 of thermal transfer plate 112 in combination with each neighboring pair of fins of the plurality of parallel fins 114 defines a slot that accommodates a corresponding SSD module of the set of SSD modules 200 within the slot. As a first example, fin 120-1 and fin 120-2 form a first neighboring pair of fins 122-1. Thermal transfer plate 112 in combination with first neighboring pair of fins 122-1 defines a first slot 124-1 that accommodates a first SSD module 210-1 of the set of SSD modules 200. As a second example, fin 120-2 and fin 120-3 form a second neighboring pair of fins 122-2. Thermal transfer plate 112 in combination with second neighboring pair of fins 122-2 defines a second slot 124-2 that accommodates a second SSD module 210-2 of the set of SSD modules 200. As another example, fin 120-18 and fin 120-19 form an eighteenth neighboring pair of fins 122-18. Thermal transfer plate 112 in combination with neighboring pair of fins 122-18 defines an eighteenth slot 124-18 that accommodates an eighteenth SSD module 210-18 of the set of SSD modules 200.

FIGS. 1 and 2 show an example in which the plurality of parallel fins 114 include three or more fins that collectively define a plurality of slots. It will be understood that thermal mounting frame 110 can include any suitable quantity of parallel fins, and that the thermal mounting frame can provide any suitable quantity of slots for accommodating SSD modules.

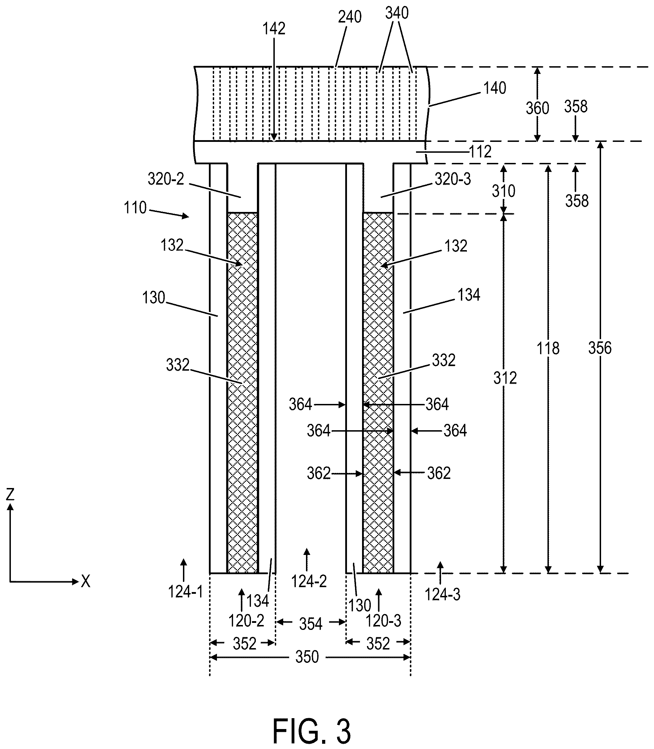

For each slot of thermal mounting frame 110, each fin of the neighboring pair of fins that defines the slot includes an exterior thermal transfer layer located between a core region of the fin and the slot. For example, as shown in FIG. 1, for slot 124-2, fin 120-3 of neighboring pair of fins 122-2 that defines slot 124-2 includes an exterior thermal transfer layer 130 located between a core region 132 of fin 120-3 and slot 124-2. Additionally, for slot 124-2, fin 120-2 of neighboring pair of fins 122-2 that defines slot 124-2 includes an exterior thermal transfer layer 134 located between a core region 132 of fin 120-2 and slot 124-2. Accordingly, each slot of thermal mounting frame 110 is bounded on either side by an exterior thermal transfer layer. As shown in FIG. 2, exterior thermal transfer layers of each neighboring pair of fins interface with and contact exterior surfaces of a corresponding SSD module of the set of SSD modules 200, thereby promoting thermal transfer from the SSD module to the neighboring pair of fins by conduction. Additional aspects of the plurality of fins 114 are described in further detail with reference to FIG. 3.

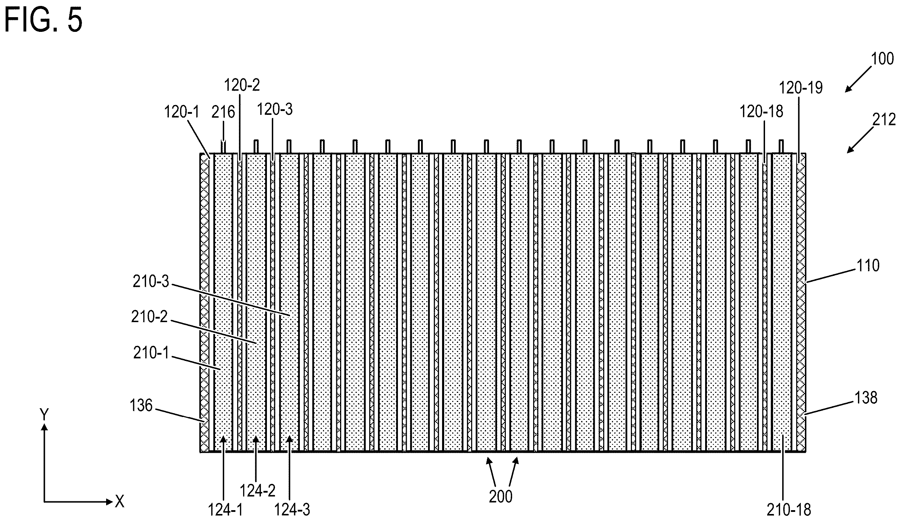

Each SSD module of the set of SSD modules 200 can be inserted into a corresponding slot or withdrawn from the corresponding slot of thermal mounting frame 110 in the Y-axis dimension. In FIG. 2, an example SSD module 210-11 of the set of SSD modules 200 is withdrawn from corresponding slot 124-11 of mounting frame 110 along axis 214 in the Y-axis dimension. As shown in FIG. 2 with respect to example SSD module 210-11, each SSD module of the set of SSD modules 200 includes a connector interface 216 for connection to other components of a computing device. Connector interface 216 can include a plurality of connector pins that are distributed along the Z-axis dimension of the connector interface. As described in further detail with reference to FIG. 5, when an SSD module of the set of SSD modules 200 is inserted into a corresponding slot of thermal mounting frame 110, connector interface 216 can project outward from mounting frame 110 in the Y-axis dimension to enable connection to a corresponding connector interface of the computing device. This configuration enables hot swapping of an SSD module of the set of SSD modules 200 independent of other SSD modules of set 200. For example, an SSD module can be removed from thermal mounting frame 110 and replaced with a substitute SSD module without removing or disrupting operation of other SSD modules of the set of SSD modules 200.

In the example of thermal mounting frame 110, fins 120-2 through 120-18 are located between fin 120-1 and fin 120-19 along the X-axis dimension. In this example, fins 120-2 through 120-18 can be referred to as interior-located fins, and fins 120-1 and 120-19 can be referred to as end-located fins among the plurality of parallel fins 114. In other examples of thermal mounting frame 110, a plurality of parallel fins that contains N fins, where N represents an integer of 3 or more fins, can include N-2 interior-located fins. Interior-located fins such as fin 120-2, as an example, includes an instance of exterior thermal transfer layer 130, and instance of exterior thermal transfer layer 134, and an instance of core region 132 located between layer 130 and 134 along the X-axis dimension. By contrast, end-located fins, such as example fins 120-1 and 120-19 may not have a second instance of an exterior thermal transfer layer on their end-facing or exterior-facing side, as depicted in FIGS. 1 and 2. For example, fin 120-1 includes an instance of exterior thermal transfer layer 134, and fin 120-19 includes an instance of exterior thermal transfer layer 130.

Furthermore, in this example, fin 120-1 as an end-located fin can include a core region 136 that differs from core region 132 of interior-located fins 120-2 through 120-18. For example, core region 136 can have a greater thickness in the X-axis dimension as compared to core region 132. Additionally, in this example, fin 120-19 as another end-located fin can include a core region 138 that differs from core region 132 of interior-located fins 120-2 through 120-18. For example, core region 138 can have a greater thickness in the X-axis dimension as compared to core region 132. Core region 136 of fin 120-1 can have the same thickness as core region 138 of fin 120-19 in this example.

Cooling system 100 further includes a heat exchanger 140 located on a second side 142 of thermal transfer plate 112, opposite first side 116. In FIG. 1, an outline of heat exchanger 140 is schematically depicted in wireframe by broken lines to reveal thermal mounting frame 110. In FIG. 2, the outline of heat exchanger 140 is schematically depicted by solid lines and exterior surfaces of heat exchanger 140 are visually represented.

As shown in FIG. 2, heat exchanger 140 can include an inlet port 220 and an outlet port 222. A fluid coolant such as a liquid coolant can be circulated through heat exchanger 140 via inlet port 220 and outlet port 222. In some examples, cooling system 100 can further include a coolant circuit 230 that is connected to inlet port 220 and outlet port 222 for circulating a fluid coolant through another heat exchanger 232 of cooling system 100 to dissipate heat from the fluid coolant. As an example, heat exchanger 232 can take the form of an air-to-liquid heat exchanger or a liquid-to-liquid heat exchanger. Coolant circuit 230 can include a pump 234 for circulating the fluid coolant along coolant circuit 230 and through heat exchanger 140.

In some examples, heat exchanger 140 can include a cover portion 240 that covers or otherwise encloses an opposing side of the heat exchanger from thermal transfer plate 112. For example, cover portion 240 can enclose an interior coolant circuit of heat exchanger 140 in combination thermal transfer plate 112. In the example of FIG. 2, cover portion 240 includes a perimeter portion 242 that can enclose and define a portion of an interior coolant circuit of heat exchanger 140 within which a coolant fluid can be circulated.

In some examples, cover portion 240 can be formed of a first material having a lower density and a lower thermal conductivity than a second material that forms thermal transfer plate 112. As a first example, the first material that forms cover portion 240 can include a polymer (e.g., a plastic), and the second material that forms thermal transfer plate 112 can include a metal or metal alloy (e.g., copper, aluminum, steel, etc.). As a second example, the first material that forms cover portion 240 can include a first metal or metal alloy (e.g., aluminum), and the second material that forms thermal transfer plate 112 can include a second metal or metal alloy (e.g., copper). It will be understood that other suitable materials or combinations of materials can be used.

By utilizing a material having a lower thermal conductivity for cover portion 240 as compared to a material that forms thermal transfer plate 112, conduction of thermal energy from the opposing side of heat exchanger 140 from the thermal transfer plate 112 can be reduced, while conduction of thermal energy from the set of SSDs via thermal transfer plate 112 to the coolant fluid that is circulated through heat exchanger 140 can be increased. By utilizing a lower density material for cover portion 240 as compared to thermal transfer plate 112, an overall weight or mass of cooling system 100 can be reduced.

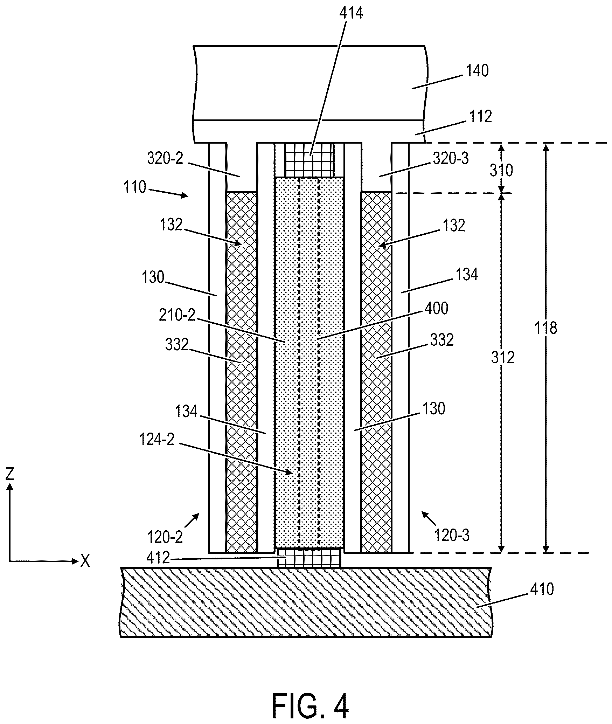

In some examples, heat exchanger 140 includes or takes the form of a cold plate. As an example, heat exchanger 140, as a cold plate, can include a set of heat exchange structures that project outward from second side 142 of thermal transfer plate 112 opposite first side 116. The set of heat exchange structures can define one or more interior flow paths for a fluid coolant between inlet port 220 and outlet port 222. For example, the set of heat exchange structures in combination with second side 142 of thermal transfer plate 112 can define an interior coolant circuit of the cold plate. In this example, cover portion 240 can further define the interior coolant circuit of the cold plate in combination with the set of heat exchange structures and second side 142 of thermal transfer plate 112. Heat exchange structures of thermal transfer plate 112 are described in further detail with reference to FIGS. 3 and 4.

FIG. 3 shows a detailed view of thermal mounting frame 110 of FIGS. 1 and 2 through a section of cooling system 100 that resides within an X-Z plane. In FIG. 3, slot 124-2 is defined by thermal transfer plate 112 in combination with fins 120-2 and 120-3 that form a neighboring pair of fins. Each of fins 120-2 and 120-3 include core region 132. For example, fin 120-3 includes exterior thermal transfer layer 130 located between core region 132 of fin 120-3 and slot 124-2 (e.g., along the X-axis dimension) within a region identified in FIG. 3 as distal portion 312 of the fins. As another example, fin 120-2 includes exterior thermal transfer layer 134 located between core region 132 of fin 120-2 and slot 124-2 (e.g., along the X-axis dimension) within the region identified as distal portion 312.

For each fin of the plurality of parallel fins 114 of thermal transfer plate 112 that defines a slot on opposing sides of the fin, core region 132 of the fin is bounded on a first side by an instance of exterior thermal transfer layer 130 and on a second side by an instance of exterior thermal transfer layer 134. For example, fin 120-3 that defines slot 124-2 includes an instance of exterior thermal transfer layer 130 on a first side of core region 132 of fin 120-3. Additionally, fin 120-3 that also defines slot 124-3 includes an instance exterior thermal transfer layer 134 on a second side of core region 132 of fin 120-3.

Similarly, fin 120-2 that defines slot 124-1 includes an instance of exterior thermal transfer layer 130 on a first side of core region 132 of fin 120-2. Additionally, fin 120-2 that also defines slot 124-2 includes an instance of exterior thermal transfer layer 134 on a second side of core region 132 of fin 120-2.

As shown in the detailed view of FIG. 3, thermal transfer plate 112 can include a plurality of parallel spines (e.g., 320-2 and 320-3) in which each spine projects into core region 132 of a corresponding fin of the plurality of parallel fins 114 along a base portion 310 of length dimension 118 of the fin. For example, thermal transfer plate 112 includes a parallel spine 320-2 that projects into core region 132 of fin 120-2. As another example, thermal transfer plate 112 includes parallel spine 320-3 that projects into core region 132 of fin 120-3.

Thermal transfer plate 112 can include a corresponding spine for each fin of the plurality fins 114. In at least some examples, each instance of exterior thermal transfer layers 130 and 134 of the plurality of fins 114 can be formed of the same material (e.g., copper, aluminum, etc.) as thermal transfer plate 112, including the plurality of parallel spines that project outward from first side 116 of the plate. As shown in the detailed view of FIG. 3 with respect to example fins 120-2 and 120-3, each exterior thermal transfer layer can be located between a spine of thermal transfer plate 112 and a slot within base portion 310. In some examples, instances of exterior thermal transfer layers 130 and 134 can be bonded, welded, or co-molded with spines of thermal transfer plate 112, which can increase thermal transfer across their boundaries. In other examples, instances of exterior thermal transfer layers 130 and 134 can be integrated with thermal transfer plate 112 as a monolith.

As schematically depicted in FIG. 3 by a shaded region 332, core region 132 of each fin of the plurality of parallel fins 114 can further include an interior support structure or an interior cavity that extends along distal portion 312 of length dimension 118 of the fin from the spine of the fin along an interior side of each exterior thermal transfer layer of the fin. In FIG. 3, instances of the interior support structure or interior cavity is depicted by shaded region at 332.

In examples where shaded region 332 of core region 132 includes an interior support structure, this interior support structure can be formed of a first material having a lower density and a lower thermal conductivity than a second material that forms exterior thermal transfer layers 130 and 134. As a first example, the first material that forms the interior support structure at 332 can include a polymer (e.g., a plastic), and the second material that forms exterior thermal transfer layers 130 and 134 can include a metal or metal alloy (e.g., copper, aluminum, steel, etc.). As a second example, the first material that forms the interior support structure at 332 can include a first metal or metal alloy (e.g., aluminum), and the second material that forms exterior thermal transfer layers 130 and 134 can include a second metal or metal alloy (e.g., copper). It will be understood that other suitable materials or combinations of materials can be used.

By providing an interior cavity or by utilizing a material having a lower thermal conductivity for shaded region 332 of core region 132 as compared to a material that forms exterior thermal transfer layers 130 and 134, conduction of thermal energy can be increased along length dimension 118 of the fins in the Z-axis dimension from the SSD modules toward thermal transfer plate 112, and conduction of thermal energy across the fins in the X-axis dimension can be reduced. By providing an internal cavity or by utilizing a lower density material for the interior support structure at 332 as compared to exterior thermal transfer layers 130 and 134, an overall weight or mass of thermal mounting frame 110 can be reduced.

FIG. 3 schematically depicts an example of a set of heat exchange structures 340 that project outward from second side 142 of thermal transfer plate 112. As previously described, the set of heat exchange structures 340 in combination with second side 142 of thermal transfer plate 112 can define an interior coolant circuit of heat exchanger 140. Furthermore, in some examples, cover portion 240 can further define the interior coolant circuit of heat exchanger 140 in combination with the set of heat exchange structures 340 and second side 142 of thermal transfer plate 112. The set of heat exchange structures 340 can be integrated with and be formed of the same material as thermal transfer plate 112, in at least some examples.

Example dimensions are depicted in FIG. 3 with respect to features of the thermal mounting frame. It will be understood that these example dimensions are provided for illustrative purposes, and that other suitable dimensions can be used. As an example, a dimension 350 along the X-axis from a boundary of fin 120-3 with slot 124-3 and a boundary of fin 120-2 with slot 124-1 is 16.1 mm; a dimension 352 representing a width of each fin along the X-axis is 5 mm; a width of each slot along the X-axis as identified by dimension 354 is 6.1 mm; a dimension 356 representing a height or depth of thermal mounting frame 110 along the Z-axis is 36 mm; a dimension 358 representing a height or depth of thermal transfer plate 112 between spines is 2 mm; a dimension 360 representing a height or depth of heat exchanger 140 along the Z-axis is 6 mm; a dimension 362 representing a width of each core region 132 along the X-axis is 2 mm; and a dimension 364 representing a width of exterior thermal transfer layer 130 or layer 134 is 1.5 mm.

FIG. 4 shows another detailed view of thermal mounting frame 110 of FIGS. 1 and 2 through the same section of cooling system 100 as shown in FIG. 3. In FIG. 4, SSD module 210-2 is located within slot 124-2. An example positioning of a PCB 400 of a solid state drive of SSD module 210-2 is schematically depicted in FIG. 4 by broken lines. As an example, each SSD module can take the form of the E1.S form factor. Solid state drives, including the E1.S form factor can be packaged into solid state drive modules that include padding and an enclosure that surround the solid state drive.

As shown in FIG. 4, exterior thermal transfer layer 130 located between core region 132 of fin 120-3 and slot 124-2 interfaces with a first side of SSD module 210-2 that is accommodated within the slot. Similarly, exterior thermal transfer layer 134 located between core region 132 of fin 120-2 and slot 124-2 interfaces with a second side of SSD module 210-2 that is accommodated within the slot.

Additionally, in FIG. 4, features of an example operating environment are depicted, including a mounting surface 410, and SSD retaining structures 412 and 414. As an example, mounting surface 410 can take the form of a motherboard or other substrate of a computing device. SSD retaining structure 412 can be provided to secure SSD module 210-2 to mounting surface 410. SSD retaining structure 414 can be provided to secure SSD module 210-2 to thermal transfer plate 112 or to fins 120-2 and 120-3. In an example, SSD retaining structures 412 and 414 can include clips that attach to the SSD module.

It will be understood that the features depicted in FIGS. 3 and 4 can be representative of other fins, slots, and thermal transfer plate structure of thermal mounting frame 110 of FIGS. 1 and 2. Additionally, the SSD module and operating environment features depicted in FIG. 4 can be similarly provided with respect to other fins and slots of thermal mounting frame 110 of FIGS. 1 and 2.

FIG. 5 shows cooling system 100 and solid state drive assembly 212 of FIG. 2 as viewed along first side 116 in the Z-axis dimension in which the set of SSD modules 200 are mounted to thermal mounting frame 110. In the view of FIG. 5, the connector interface of each SSD module of the set of modules 200 for connection to other components of a computing device is visible. For example, connector interface 216 of SSD module 210-1 for connection to other components of a computing device is identified in FIG. 5. As shown in FIG. 5, when each SSD module is inserted into a corresponding slot of thermal mounting frame 110 to mount that SSD module to the thermal mounting frame, connector interface 216 of that SSD module projects outward from the mounting frame in the Y-axis dimension to enable connection to a corresponding connector interface of the computing device. This configuration enables hot swapping of an SSD module of the set of SSD modules 200 independent of other SSD modules of set 200. For example, an SSD module can be removed from thermal mounting frame 110 and replaced with a substitute SSD module without removing or disrupting operation of other SSD modules of the set of SSD modules 200.

The following examples are disclosed herein by the preceding description and associated drawings.

Example 1. A cooling system for a set of solid state drive (SSD) modules, the cooling system comprising: a thermal mounting frame that includes: a thermal transfer plate, and a plurality of parallel fins that project outward from a first side of the thermal transfer plate along a length dimension; and a heat exchanger located on a second side of the thermal transfer plate; wherein the first side of the thermal transfer plate in combination with each neighboring pair of fins of the plurality of parallel fins defines a slot that accommodates a corresponding SSD module of the set of SSD modules; wherein the thermal transfer plate includes a plurality of parallel spines in which each spine projects into a core region of a corresponding fin of the plurality of parallel fins along a base portion of the length dimension of the fin; wherein for each slot, each fin of the neighboring pair of fins that defines the slot includes an exterior thermal transfer layer located between the core region of the fin and the slot.

Example 2. The cooling system of Example 1, wherein the plurality of parallel fins include three or more fins that collectively define a plurality of slots.

Example 3. The cooling system of any of Examples 1-2, wherein the core region of each fin of the plurality of parallel fins further includes an interior cavity that extends along a distal portion of the length dimension of the fin from the spine of the fin along an interior side of each exterior thermal transfer layer of the fin.

Example 4. The cooling system of any of Examples 1-2, wherein the core region of each fin of the plurality of parallel fins further includes an interior support structure that extends along a distal portion of the length dimension of the fin from the spine of the fin along an interior side of each exterior thermal transfer layer of the fin.

Example 5. The cooling system of Example 4, wherein the interior support structure is formed of a first material having a lower density and a lower thermal conductivity than a second material that forms each exterior thermal transfer layer of each fin of the plurality of fins.

Example 6. The cooling system of any of Examples 1-5, wherein the heat exchanger includes a cold plate.

Example 7. The cooling system of Example 6, wherein the cold plate includes a set of heat exchange structures that project outward from a second side of the thermal transfer plate opposite the first side; and wherein the set of heat exchange structures in combination with the second side of the thermal transfer plate define an interior coolant circuit of the cold plate.

Example 8. The cooling system of Example 7, wherein the cold plate further includes a cover portion that further defines the interior coolant circuit of the cold plate in combination with the set of heat exchange structures and the second side of the thermal transfer plate.

Example 9. The cooling system of Example 8, wherein the cover portion is formed of a first material having a lower density and a lower thermal conductivity than a second material that forms the thermal transfer plate.

Example 10. A solid state drive assembly for a computing device, the assembly comprising: a plurality of solid state drive (SSD) modules; and a thermal mounting frame that includes: a thermal transfer plate, and a plurality of parallel fins that project outward from a first side of the thermal transfer plate along a length dimension; wherein the first side of the thermal transfer plate in combination with each neighboring pair of fins of the plurality of parallel fins defines a slot that accommodates a corresponding SSD module of the plurality of SSD modules within the slot; wherein the thermal transfer plate includes a plurality of parallel spines in which each spine projects into a core region of a corresponding fin of the plurality of parallel fins along a base portion of the length dimension of the fin; for each slot, each fin of the neighboring pair of fins that defines the slot includes an exterior thermal transfer layer located between the core region of the fin and the slot to interface with the SSD module that is accommodated within the slot.

Example 11. The assembly of Example 10, wherein the core region of each fin of the plurality of parallel fins further includes an interior cavity that extends along a distal portion of the length dimension of the fin from the spine of the fin along an interior side of each exterior thermal transfer layer of the fin.

Example 12. The assembly of Example 10, wherein the core region of each fin of the plurality of parallel fins further includes an interior support structure that extends along a distal portion of the length dimension of the fin from the spine of the fin.

Example 13. The assembly of any of Examples 10-12, further comprising a heat exchanger located on a second side of the thermal transfer plate.

Example 14. The assembly of Example 13, wherein the heat exchanger includes a cold plate.

Example 15. The assembly of Example 14, wherein the cold plate further includes a cover portion that encloses an interior region of the cold plate in combination with the second side of the thermal transfer plate.

Example 16. The assembly of Example 15, wherein the cover portion is formed of a first material having a lower density and a lower thermal conductivity than a second material that forms the thermal transfer plate.

Example 17. A thermal mounting frame for a plurality of solid state drive (SSD) modules, the thermal mounting frame comprising: a thermal transfer plate; and a plurality of parallel fins that project outward from a first side of the thermal transfer plate along a length dimension; wherein the first side of the thermal transfer plate in combination with each neighboring pair of fins of the plurality of parallel fins defines a slot that accommodates a corresponding SSD module of the plurality of SSD modules; wherein the thermal transfer plate includes a plurality of parallel spines in which each spine projects into a core region of a corresponding fin of the plurality of parallel fins along a base portion of the length dimension of the fin; for each slot, each fin of the neighboring pair of fins that defines the slot includes an exterior thermal transfer layer located between the core region of the fin and the slot.

Example 18. The thermal mounting frame of Example 17, wherein the plurality of parallel fins include three or more fins that collectively define a plurality of slots.

Example 19. The thermal mounting frame of any of Examples 17-18, wherein the core region of each fin of the plurality of parallel fins further includes an interior support structure that extends along a distal portion of the length dimension of the fin from the spine of the fin along an interior side of each exterior thermal transfer layer of the fin.

Example 20. The thermal mounting frame of Example 19, wherein the interior support structure is formed of a first material having a lower density and a lower thermal conductivity than a second material that forms each exterior thermal transfer layer of each fin of the plurality of fins.

A cooling system is defined. The cooling system is for a set of solid state drive (SSD) modules includes a thermal mounting frame. The thermal mounting frame includes a thermal transfer plate, and a plurality of parallel fins that project outward from a first side of the thermal transfer plate along a length dimension. The first side of the thermal transfer plate in combination with each neighboring pair of fins of the plurality of parallel fins defines a slot that accommodates a corresponding SSD module of the set of SSD modules. The thermal transfer plate includes a plurality of parallel spines in which each spine projects into a core region of a corresponding fin of the plurality of parallel fins along a base portion of the length dimension of the fin. For each slot, each fin of the neighboring pair of fins that defines the slot includes an exterior thermal transfer layer.

It will be understood that the configurations and/or approaches described herein are exemplary in nature, and that these specific embodiments or examples are not to be considered in a limiting sense, because numerous variations are possible.

The subject matter of the present disclosure includes all novel and non-obvious combinations and sub-combinations of the various configurations and other features, functions, acts, and/or properties disclosed herein, as well as any and all equivalents thereof.

## Claims

1. A cooling system (100) for a set of solid state drive 'SSD' modules (200), the cooling system comprising:
a thermal mounting frame (110) that includes:
a thermal transfer plate (112), and
a plurality of parallel fins (114) that project outward from a first side (116) of the thermal transfer plate along a length dimension (118); and
a heat exchanger (140) located on a second side (142) of the thermal transfer plate;
wherein the first side of the thermal transfer plate in combination with each neighboring pair of fins (122) of the plurality of parallel fins defines a slot (124) that accommodates a corresponding SSD module (210) of the set of SSD modules;
wherein the thermal transfer plate includes a plurality of parallel spines (320) in which each spine projects into a core region (132) of a corresponding fin (120) of the plurality of parallel fins along a base portion (310) of the length dimension of the fin;
wherein for each slot, each fin of the neighboring pair of fins that defines the slot includes an exterior thermal transfer layer (130) located between the core region of the fin and the slot.

2. The cooling system of claim 1, wherein the plurality of parallel fins include three or more fins that collectively define a plurality of slots.

3. The cooling system of claim 1 or claim 2, wherein the core region of each fin of the plurality of parallel fins further includes an interior cavity that extends along a distal portion of the length dimension of the fin from the spine of the fin along an interior side of each exterior thermal transfer layer of the fin.

4. The cooling system of any previous claim, wherein the core region of each fin of the plurality of parallel fins further includes an interior support structure that extends along a distal portion of the length dimension of the fin from the spine of the fin along an interior side of each exterior thermal transfer layer of the fin, and optionally, wherein the interior support structure is formed of a first material having a lower density and a lower thermal conductivity than a second material that forms each exterior thermal transfer layer of each fin of the plurality of fins.

5. The cooling system of any previous claim, wherein the heat exchanger includes a cold plate.

6. The cooling system of claim 5, wherein the cold plate includes a set of heat exchange structures that project outward from a second side of the thermal transfer plate opposite the first side;
wherein the set of heat exchange structures in combination with the second side of the thermal transfer plate define an interior coolant circuit of the cold plate.

7. The cooling system of claim 6, wherein the cold plate further includes a cover portion that further defines the interior coolant circuit of the cold plate in combination with the set of heat exchange structures and the second side of the thermal transfer plate, and optionally, wherein the cover portion is formed of a first material having a lower density and a lower thermal conductivity than a second material that forms the thermal transfer plate.

8. A solid state drive assembly (212) for a computing device, the assembly comprising:
a plurality of solid state drive 'SSD' modules (200, 210-1 - 210-2); and
a thermal mounting frame (110) that includes:
a thermal transfer plate (112), and
a plurality of parallel fins (114) that project outward from a first side (116) of the thermal transfer plate along a length dimension (118);
wherein the first side of the thermal transfer plate in combination with each neighboring pair (122) of fins of the plurality of parallel fins defines a slot (124) that accommodates a corresponding SSD module (210) of the plurality of SSD modules within the slot;
wherein the thermal transfer plate includes a plurality of parallel spines (320) in which each spine projects into a core region (132) of a corresponding fin (120) of the plurality of parallel fins along a base portion (310) of the length dimension of the fin;
for each slot, each fin of the neighboring pair of fins that defines the slot includes an exterior thermal transfer layer (130) located between the core region of the fin and the slot to interface with the SSD module that is accommodated within the slot.

9. The assembly of claim 8, wherein the core region of each fin of the plurality of parallel fins further includes at least one of:
an interior cavity that extends along a distal portion of the length dimension of the fin from the spine of the fin along an interior side of each exterior thermal transfer layer of the fin; and
an interior support structure that extends along a distal portion of the length dimension of the fin from the spine of the fin.

10. The assembly of claim 8 or claim 9, further comprising a heat exchanger located on a second side of the thermal transfer plate.

11. The assembly of claim 10, wherein the heat exchanger includes a cold plate.

12. The assembly of claim 11, wherein the cold plate further includes a cover portion that encloses an interior region of the cold plate in combination with the second side of the thermal transfer plate, and optionally, wherein the cover portion is formed of a first material having a lower density and a lower thermal conductivity than a second material that forms the thermal transfer plate.

13. A thermal mounting frame (110) for a plurality of solid state drive 'SSD' modules (200, 210-1 - 210-2), the thermal mounting frame comprising:
a thermal transfer plate (112); and
a plurality of parallel fins (114) that project outward from a first side (116) of the thermal transfer plate along a length dimension (118);
wherein the first side of the thermal transfer plate in combination with each neighboring pair of fins (122) of the plurality of parallel fins defines a slot (124) that accommodates a corresponding SSD module (210) of the plurality of SSD modules;
wherein the thermal transfer plate includes a plurality of parallel spines (320) in which each spine projects into a core region (132) of a corresponding fin (120) of the plurality of parallel fins along a base portion (310) of the length dimension of the fin;
for each slot, each fin of the neighboring pair of fins that defines the slot includes an exterior thermal transfer layer (130) located between the core region of the fin and the slot.

14. The thermal mounting frame of claim 13, wherein the plurality of parallel fins include three or more fins that collectively define a plurality of slots.

15. The thermal mounting frame of claim 13 or claim 14, wherein the core region of each fin of the plurality of parallel fins further includes an interior support structure that extends along a distal portion of the length dimension of the fin from the spine of the fin along an interior side of each exterior thermal transfer layer of the fin, and optionally, wherein the interior support structure is formed of a first material having a lower density and a lower thermal conductivity than a second material that forms each exterior thermal transfer layer of each fin of the plurality of fins.
